# EUROPEAN PATENT APPLICATION

(11) **EP 2 178 252 A1**
(43) Date of publication of application: **21.04.2010**
(21) Application number: 09157438.4
(22) Date of filing: 06.04.2009
(51) Int. Cl.: H04L 12/56

(54) **Method for sharing community network service information**

(30) Priority: 14.10.2008 TW 97139434
(71) Applicant: ACER INCORPORATED, Taipei Hsien 221 (TW)
(72) Inventor: Tsai, Chieh-Chih, Taipei Hsien 221 (TW); Lin, Yung-Sen, Taipei Hsien 221 (TW); Tsai, Chuan-Ming, Taipei Hsien 221 (TW)
(74) Representative: Michalski Hüttermann & Partner Patentanwälte

(57) **Abstract**

A method and system for sharing community network service information is disclosed in that users send their community network service information (13) and their friend lists (14) for real-time communication to a data serve (11), and share the community network service information (13) with the friends in the friend lists (14) who have logged on to the data server (11). Thus, the users share the community information from different community network service platforms with their friends. The data server (11) can periodically confirm whether the users and their friends update the community network service information (13) and send the updated information to the users and their friends.

## Description

### BACKGROUND OF THE INVENTION

### (a) Field of the Invention

The present invention relates to a method and system for sharing community network service information, and more particularly to a technical field of sharing community network service information through the friend lists of users.

### (b) Description of the Prior Art:

The instant message services have been a very popular network application. After users log onto a server, they can receive the state data of other friends who have logged on. Users and their friends can exchange messages and pictures in real time. Instant messages have become a tool by means of which modern people develop the community relationship. Moreover, another popular network service relates to community network services that provide a network data storage space to a user and have the application programs associated with a blog function, a multimedia data management function and a function of managing friends' authority.

Today, some firms simultaneously offer instant message services and community network services as well as provide the function of mutually updating the information between the two services. For example, after a user has logged onto an instant message service server, in addition to receiving the state data of other friends who have logged on, the user can receive the state data of the blogs established in the community network that is provided by the same firm by these friends. Also, there are icons on the interface between the two services, which link the two services.

However, currently, there are many instant message services and many community network services. That is to say, the friends of a user in an instant message network may establish their respective blogs in different community networks, or the friends in a community network may use different instant message services. This causes inconvenience for users in managing their community network relationship.

### SUMMARY OF THE INVENTION

In view of the above problems of the prior art, an objective of the present invention is to provide a method and system for sharing community network service information to allow users and their friends to share the community information from different community information service platforms.

An objective of the present invention is to provide a method and system for sharing community network service information to allow users to integrate the real-time communication information and community network information of their friends.

An objective of the present invention is to provide a method and system for sharing community network service information to allow users to immediately update the real-time communication information and community network information of their friends.

According to an objective of the present invention, it is to provide a method for sharing community network service information, which is provided for a user to share community network service information with the user's friends, comprising the following steps. Firstly, the user logs onto a data server and sends community network service information of the user to the data server. Next, a friend list of the user is accessed, then confirming whether at least one friend in the friend list has logged onto the data server or not. If at least one friend in the friend list has logged onto the data server, the community network service information of the user is sent to the friends who have logged on via the data server.

Wherein the friend list comprises information of the friends set in an instant message service platform by the user.

Wherein this method further comprises enabling the user to log onto an instant message service platform via the data server so as to download the friend list from the instant message service platform.

According to an objective of the present invention, it is further to provide a system for sharing community network service information, which is provided for a user to share community network service information with the user's friends, comprising a data server and an internet access device. The internet access device is provided for the user to set the community network service information and go web surfing to download a friend list. The user uses the internet access device to log onto the data server such that the data server can receive the community network service information and the friend list of the user, and the data server confirms whether at least one friend in the friend list has logged onto the data server or not. If at least one friend in the friend list has logged onto the data server, the data server sends the community network service information of the user to the friends who have logged on.

Wherein the friend list comprises information of the friends set in an instant message service platform by the user.

Wherein the user logs onto the instant message service platform via the data server so as to download the friend list from the instant message service platform.

### BRIEF DESCRIPTION OF THE DRAWINGS

Fig. 1 is a block diagram of a first embodiment of a system for sharing community network service information according to the present invention;
Fig. 2 is a block diagram of a second embodiment of a system for sharing community network service information according to the present invention;
Fig. 3 is a flow chart showing the steps of a method for sharing community network service information according to the present invention;
Fig. 4 is a flow chart showing the steps of a first embodiment of a method for sharing community network service information according to the present invention;
Fig. 5 is a flow chart showing the steps of a second embodiment of a method for sharing community network service information according to the present invention; and
Fig. 6 is a flow chart showing the steps of an embodiment illustrating data update in a method for sharing community network service information according to the present invention.

### DETAILED DESCRIPTION OF THE PREFERRED EMBODIMENTS

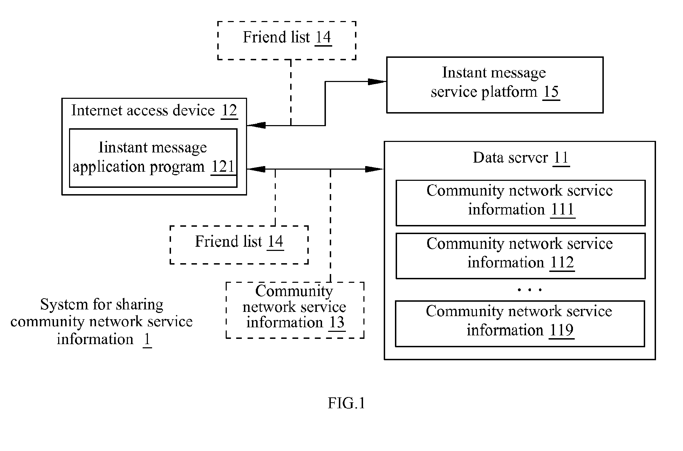

Referring to Fig. 1, a block diagram of a first embodiment of a system for sharing community network service information according to the present invention is illustrated. In this figure, a system for sharing community network service information 1 comprises a data server 11 and an internet access device 12. The internet access device 12 stores an instant message application program 121. The user can execute the instant message application program 121 and go web surfing to log onto an instant message service platform 15. After the user has successfully logged on, a friend list 14 is downloaded from the instant message service platform 15. The friend list 14 comprises information of the friends set in the instant message service platform 15 by the user. The user also operates the internet access device 12 to set the community network service information 13. The user also operates and uses the internet access device 12 to log onto the data server 11 and sends the community network service information 13 and the friend list 14 of the user to the data server 11. The data server 11 confirms whether at least one friend in the friend list 14 has logged onto the data server 11 or not. If at least one friend in the friend list 14 has logged onto the data server 11, the data server 11 sends the community network service information 13 of the user to the friends who have logged on. Moreover, the data server 11 also stores the community network service information 111, 112, 119 of logged-in users. The data server 11 makes comparison of the friend list 14 so as to confirm whether any friend in the friend list 14 has sent his/her community network service information to the data server 11 or not. If yes, the community network service information of the friends in the friend list 14 is sent to the internet access device 12. The data server 11 can periodically confirm whether the friends in the friend list 14 update the community network service information or not. If yes, the updated community network service information is sent to the internet access device 12.

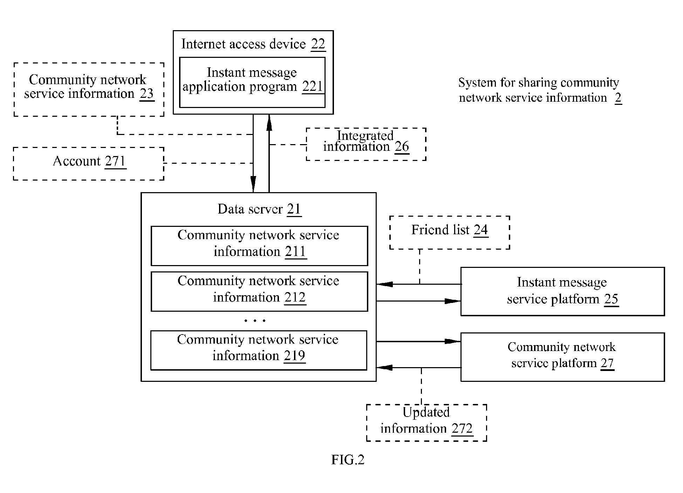

Referring to Fig. 2, a block diagram of a second embodiment of a system for sharing community network service information according to the present invention is illustrated. In this figure, a system for sharing community network service information 2 comprises a data server 21 and an internet access device 22. The internet access device 22 stores an instant message application program 221. The user operates the internet access device 22 to set the community network service information 23 and executes the instant message application program 221 to go web surfing and log onto the data server 21. After the user has successfully logged on, the user logs onto an instant message service platform 25 via the data server 21. After the user has successfully logged onto the instant message service platform 25, the data server 21 downloads a friend list 24 from the instant message service platform 25. The community network service information 23 of the user is also sent to the data server 21.

Next, the data server 21 confirms whether at least one friend in the friend list 24 has logged onto the data server 21 or not. If at least one friend in the friend list 24 has logged onto the data server 21, the data server 21 sends the community network service information 23 of the user to the friends who have logged on. Moreover, the data server 21 also integrates the community network service information of the friends in the friend list 24 with the friend list 24 and sends the integrated information 26 to the internet access device 22.

Furthermore, the user can send the account 271 of the user in a community network service platform 27 to the data server 21. The data server 21 confirms whether the user updates the information in the community network service platform 27 or not according to the account 271. If yes, the updated information 272 is downloaded from the community network service platform 27. Moreover, after downloading, the data server 21 can send the updated information 272 to the friends who have logged on.

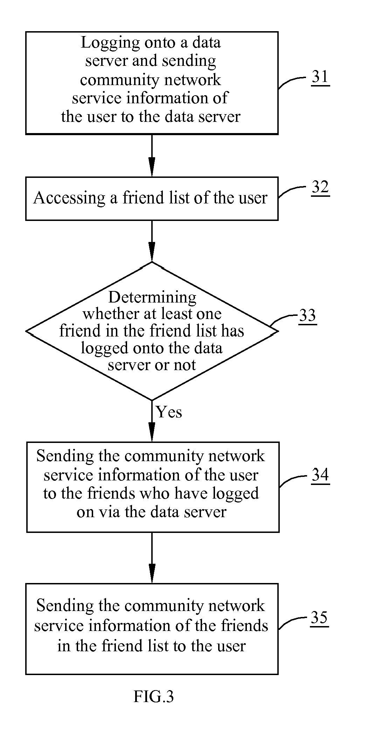

Referring to Fig. 3, a flow chart showing the steps of a method for sharing community network service information according to the present invention is illustrated. In this figure, a method for sharing community network service information, which is provided for a user to share community network service information with the user's friends, comprises the following steps. In step 31, the user logs onto a data server and sends community network service information of the user to the data server. In step 32, a friend list of the user, such as a friend list set in an instant message service platform by the user, is accessed. In step 33, whether at least one friend in the friend list has logged onto the data server or not is determined. If yes, the community network service information of the user is sent to the friends who have logged on via the data server in step 34. In step 35, the community network service information of the friends in the friend list is sent to the user.

Moreover, according to this method, the account of the user in a community network service platform may optionally be sent to the data server. The data server confirms whether the user updates the information in the community network service platform or not according to the account. If yes, the updated information of the user is downloaded from the community network service platform and the updated information is then sent to the friends who have logged onto the data server, thus achieving the sharing effect.

In addition, the data server end can periodically confirm whether logged-in users have updated the community network service information or not, or the user can periodically send an update confirmation message to the data server after logging into the data server from an internet access device. Then, the data server confirms whether the user's friends have updated the community network service information or not.

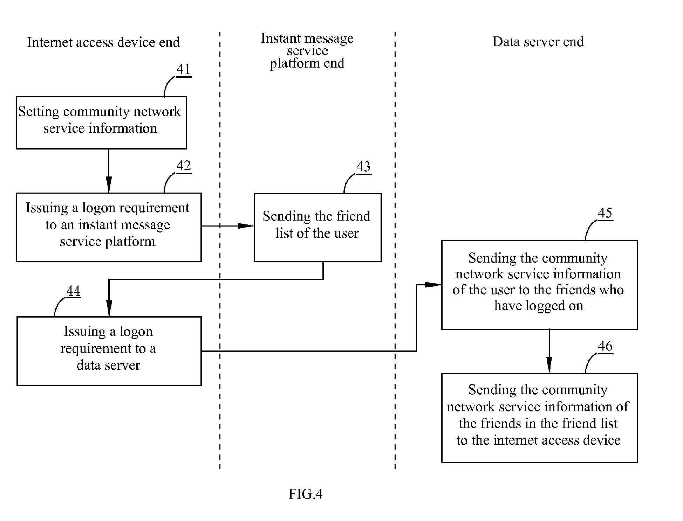

Referring to Fig. 4, a flow chart showing the steps of a first embodiment of a method for sharing community network service information according to the present invention is illustrated. In this figure, the user sets the community network service information on an internet access device in step 41. In step 42, the user issues a logon requirement to an instant message service platform and sends corresponding identification information to the instant message service platform so as to complete the logon procedure. In step 43, the friend list is sent from the instant message service platform to the internet access device. In step 44, the user issues a logon requirement to a data server and sends corresponding identification information to the data server so as to complete the logon procedure. In step 45, whether at least one friend in the friend list has logged onto the data server or not is confirmed, and the community network service information of the user is sent to the friends who have logged on. In step 46, the community network service information of the friends in the friend list is sent to the internet access device.

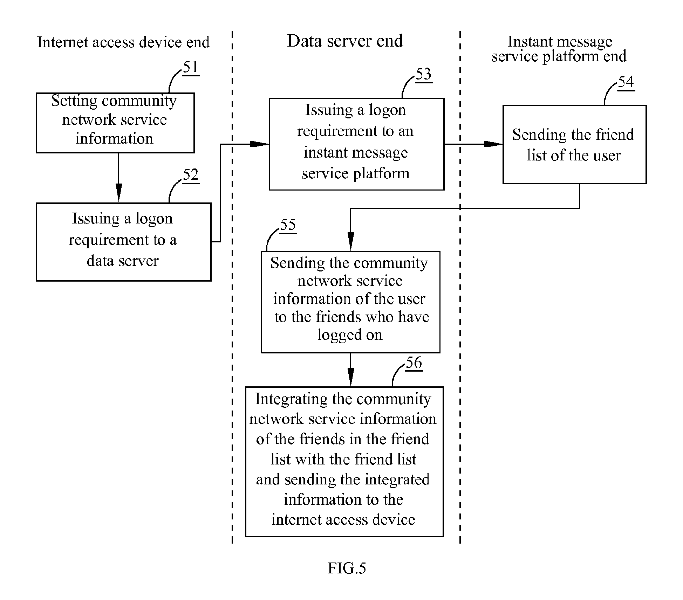

Referring to Fig. 5, a flow chart showing the steps of a second embodiment of a method for sharing community network service information according to the present invention is illustrated. In this figure, the user sets the community network service information on an internet access device in step 51. In step 52, the user issues a logon requirement to a data server and sends corresponding identification information to the data server so as to complete the logon procedure. In step 53, the user issues a logon requirement to an instant message service platform via the data server and sends corresponding identification information to the instant message service platform so as to complete the logon procedure. In step 54, the friend list is sent from the instant message service platform to the internet access device. In step 55, whether at least one friend in the friend list has logged onto the data server or not is confirmed, and the community network service information of the user is sent to the friends who have logged on. In step 56, the community network service information of the friends in the friend list is integrated with the friend list and the integrated information is sent to the internet access device.

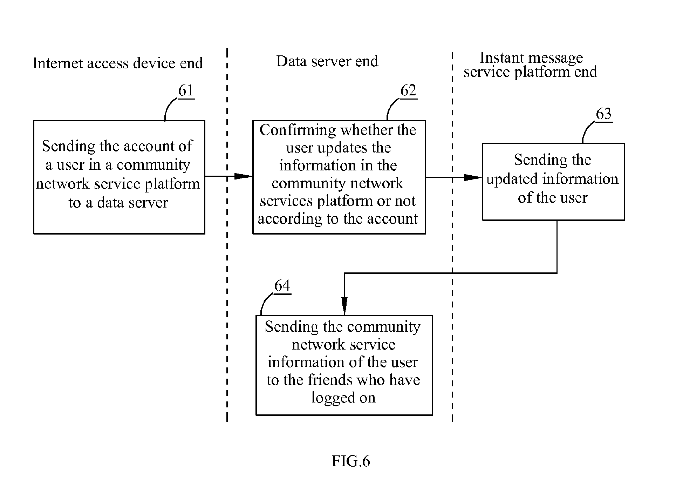

Referring to Fig. 6, a flow chart showing the steps of an embodiment illustrating data update in a method for sharing community network service information according to the present invention is illustrated. In this figure, the account of a user in a community network service platform is sent to a data server in step 61. In step 62, the data server confirms whether the user updates the information in the community network service platform or not according to the account. The above confirmation mechanism may include regular confirmation that is performed by the data server or confirmation that is performed when the user logs on.

If it is confirmed that the user has updated the information, the updated information of the user is sent from the community network service platform to the data server in step 63. Next, in step 64, the updated information is sent to the friends who have logged onto the data server. Thus, even though the user updates the information in the community network service platform without logging into the data server, the updated information will be shared among the user's friends through the above embodiments.

## Claims

1. A method for sharing community network service information (13, 23), which is provided for a user to share community network service information (13, 23) with the user's friends, comprising:
logging into a data server (11, 21) and sending community network service information (13, 23) of the user to the data server (11, 21);
accessing a friend list (14, 24) of the user;
confirming whether at least one friend in the friend list (14, 24) has logged onto the data server (11, 21) or not; and
sending, via the data server (11, 21), the community network service information (13, 23) of the user to the friends who have logged onto the data server (11, 21).

2. The method for sharing community network service information (13, 23) as recited in claim 1, wherein the friend list (14, 24) comprises information of the friends set in an instant message service platform (15, 25) by the user, the method further comprising:
enabling the user to log onto the instant message service platform (15, 25) via the data server (11, 21) so as to download the friend list (14, 24) from the instant message service platform (15, 25); and
integrating the friend list (14, 24) and the community network service information (13, 23) of the friends in the friend list (14, 24) by the data server (11, 21) and sending the integrated information to the user.

3. The method for sharing community network service information (13, 23) as recited in claim 1, further comprising:
sending the community network service information (13, 23) of the friends in the friend list (14, 24) to the user.

4. The method for sharing community network service information (13, 23) as recited in claim 1, further comprising:
sending the account of the user in a community network service platform (27) to the data server (11, 21); and
confirming whether the user updates the information in the community network service platform (27) or not according to the account by the data server (11, 21), and if yes, downloading the updated information of the user from the community network service platform (27).

5. The method for sharing community network service information (13, 23) as recited in claim 4, further comprising:
sending the updated information of the user to the friends who have logged on after the data server (11, 21) has downloaded the updated information of the user from the community network service platform (27), wherein the data server (11, 21) periodically confirms whether the user updates the information in the community network service platform (27) or not.

6. The method for sharing community network service information (13, 23) as recited in claim 1, further comprising:
periodically confirming whether the friends in the friend list (14, 24) update the community network service information (13, 23) or not; and
sending the updated community network service information (13, 23) to the user if the friends in the friend list (14, 24) have updated the community network service information (13, 23).

7. A system for sharing community network service information (13, 23), which is provided for a user to share community network service information (13, 23) with the user's friends, comprising:
a data server (11, 21);
an internet access device, which is provided for the user to set the community network service information (13, 23) and go web surfing to download a friend list (14, 24);
wherein the user uses the internet access device to log onto the data server (11, 21) such that the data server (11, 21) can receive the community network service information (13, 23) and the friend list (14, 24) of the user, and the data server (11, 21) confirms whether at least one friend in the friend list (14, 24) has logged onto the data server (11, 21) or not;
wherein if at least one friend in the friend list (14, 24) has logged onto the data server (11, 21), the data server (11, 21) sends the community network service information (13, 23) of the user to the friends who have logged on.

8. The system for sharing community network service information (13, 23) as recited in claim 7, wherein the friend list (14, 24) comprises information of the friends set in an instant message service platform (15, 25) by the user, and the user logs onto the instant message service platform (15, 25) via the data server (11, 21) so as to download the friend list (14, 24) from the instant message service platform (15, 25).

9. The system for sharing community network service information (13, 23) as recited in claim 8, wherein the data server (11, 21) integrates the friend list (14, 24) and the community network service information (13, 23) of the friends in the friend list (14, 24) and sends the integrated information to the internet access device.

10. The system for sharing community network service information (13, 23) as recited in claim 7, wherein the data server (11, 21) sends the community network service information (13, 23) of the friends who have logged on to the internet access device.

11. The system for sharing community network service information (13, 23) as recited in claim 7, wherein the user uses the internet access device to send the account of a community network service platform (27) to the data server (11, 21), and the data server (11, 21) confirms whether the user updates the information in the community network service platform (27) or not according to the account, and if yes, the updated information of the user is downloaded from the community network service platform (27).

12. The system for sharing community network service information (13, 23) as recited in claim 11, wherein the updated information of the user is sent to the friends who have logged on after the data server (11, 21) has downloaded the updated information of the user from the community network service platform (27).

13. The system for sharing community network service information (13, 23) as recited in claim 11, wherein the data server (11, 21) periodically confirms whether the user updates the information in the community network service platform (27) or not.

14. The system for sharing community network service information (13, 23) as recited in claim 7, wherein the data server (11, 21) periodically confirms whether the friends who have logged on update the community network service information (13, 23) or not.

15. The system for sharing community network service information (13, 23) as recited in claim 14, wherein the data server (11, 21) sends the updated community network service information (13, 23) to the internet access device if the friends who have logged on have updated the community network service information (13, 23).

## Amended claims

### Amended claims in accordance with Rule 137(2) EPC.

**1.** A method for sharing community network service information (13, 23), **characterized in that** the method is provided for a user to integrate and immediately update instant communication information and the community network service information (13, 23) of the user's friends, and to share the community network service information (13, 23) from different community information service platforms (27) with the user's friends, comprising
logging into a data server (11, 21) and sending community network service information (13, 23) of the user to the data server (11, 21);
accessing a friend list (14, 24) of the user from an instant message service platform (15, 25);
confirming whether at least one friend in the friend list (14, 24) has logged onto the data server (11, 21) or not;
sending, via the data server (11, 21), the community network service information (13, 23) of the user to the friends who have logged onto the data server (11, 21);
sending the community network service information (13, 23) of the friends who have logged onto the data server (11, 21) to the user; and
periodically confirming whether the user or the user's friends have updated the community network service information (13, 23) or not by the data server (11, 21).

**2.** The method for sharing community network service information (13, 23) as recited in claim 1, wherein the friend list (14, 24) comprises information of the friends set in the instant message service platform (15, 25) by the user, the method further comprising:
enabling the user to log onto the instant message service platform (15, 25) via the data server (11, 21) so as to download the friend list (14, 24) from the instant message service platform (15, 25); and
integrating the friend list (14, 24) and the community network service information (13, 23) of the friends in the friend list (14, 24) by the data server (11, 21) and sending the integrated information to the user.

**3.** The method for sharing community network service information (13, 23) as recited in claim 1, further comprising:
periodically sending an update confirmation message to the data server (11, 21) after the user logging into the data server, so as to confirm whether the user's friends have updated the community network service information (13, 23) or not by the data server (11, 21).

**4.** The method for sharing community network service information (13, 23) as recited in claim 1, further comprising:
sending an account of the user in a community network service platform (27) to the data server (11, 21); and
confirming whether the user updates the information in the community network service platform (27) or not according to the account by the data server (11, 21), and if yes, downloading the updated information of the user from the community network service platform (27).

**5.** The method for sharing community network service information (13, 23) as recited in claim 4, further comprising:
sending the updated information of the user to the friends who have logged on after the data server (11, 21) has downloaded the updated information of the user from the community network service platform (27).

**6.** The method for sharing community network service information (13, 23) as recited in claim 1, further comprising:
sending the updated community network service information (13, 23) to the user if the friends in the friend list (14, 24) have updated the community network service information (13, 23).

**7.** A system for sharing community network service information (13, 23), **characterized in that** the system is provided for a user to integrate and immediately update instant communication information and the community network service information (13, 23) of the user's friends, and to share the community network service information (13, 23) from different community information service platforms (27) with the user's friends, comprising:
a data server (11, 21);
a plurality of internet access devices (12), which are provided respectively for the user and the user's friends to set the community network service information (13, 23) and go web surfing to download a friend list (14, 24) from an instant message service platform (15, 25);
wherein the user uses the internet access device (12) to log onto the data server (11, 21) such that the data server (11, 21) can receive the community network service information (13, 23) and the friend list (14, 24) of the user, and the data server (11, 21) confirms whether at least one friend in the friend list (14, 24) has logged onto the data server (11, 21) or not via the internet access devices (12);
wherein if at least one friend in the friend list (14, 24) has logged onto the data server (11, 21), the data server (11, 21) sends the community network service information (13, 23) of the user to the friends who have logged on, and the community network service information (13, 23) of the friends who have logged on is sent to the user;
wherein the data server (11, 21) periodically confirms whether the user or the user's friends have updated the community network service information (13, 23) or not.

**8.** The system for sharing community network service information (13, 23) as recited in claim 7, wherein the friend list (14, 24) comprises information of the friends set in the instant message service platform (15, 25) by the user, and the user logs onto the instant message service platform (15, 25) via the data server (11, 21) so as to download the friend list (14, 24) from the instant message service platform (15, 25).

**9.** The system for sharing community network service information (13, 23) as recited in claim 8, wherein the data server (11, 21) integrates the friend list (14, 24) and the community network service information (13, 23) of the friends in the friend list (14, 24) and sends the integrated information to the internet access device.

**10.** The system for sharing community network service information (13, 23) as recited in claim 7, wherein an update confirmation message is periodically sent to the data server (11, 21) after the user logging into the data server, so as to confirm whether the user's friends have updated the community network service information (13, 23) or not by the data server (11, 21).

**11.** The system for sharing community network service information (13, 23) as recited in claim 7, wherein the user uses the internet access device to send an account of a community network service platform (27) to the data server (11, 21), and the data server (11, 21) confirms whether the user updates the information in the community network service platform (27) or not according to the account, and if yes, the updated information of the user is downloaded from the community network service platform (27).

**12.** The system for sharing community network service information (13, 23) as recited in claim 11, wherein the updated information of the user is sent to the friends who have logged on after the data server (11, 21) has downloaded the updated information of the user from the community network service platform (27).

**13.** The system for sharing community network service information (13, 23) as recited in claim 7, wherein the data server (11, 21) sends the updated community network service information (13, 23) to the internet access device if the friends who have logged on have updated the community network service information (13, 23).
